# EUROPÄISCHE PATENTANMELDUNG

(11) **EP 1 336 838 A2**
(43) Veröffentlichungstag der Anmeldung: **20.08.2003**
(21) Anmeldenummer: 03000196.0
(22) Anmeldetag: 07.01.2003
(51) Int. Cl.: G01N 27/22

(54) **Verfahren und Einrichtung zum Prüfen der Haftung von Kunststoffbeschichtungen auf Oberflächen von Gegenständen**

(30) Priorität: 16.02.2002 DE 10206799
(71) Anmelder: Romani, Foud, Dr., 52072 Aachen (DE)
(72) Erfinder: Romani, Foud, Dr. Ing., 52072 Aachen (DE); Prinz, Udo, Dipl. Ing., 66571 Eppelborn (DE)
(74) Vertreter: Klein, Friedrich

(57) **Zusammenfassung**

Die Erfindung betrifft ein Verfahren und eine Einrichtung zur zerstörungsfreien Prüfung der Haftung von Kunststoffbeschichtungen auf Oberflächen von vorzugsweise metallenen Prüflingen, wobei der Wert der Permittivität eines Prüflings ermittelt und mit dem Wert der Permittivität eines Vergleichs-Prüflings (1) zur Bildung eines Differenzwertes verglichen wird, der eine Aussage über die Qualität der Haftung der Kunststoffbeschichtung ermöglicht.

## Beschreibung

Die Erfindung betrifft ein Verfahren und eine Einrichtung zur zerstörungsfreien Prüfung der Qualität der Haftung von Kunststoffbeschichtungen auf Oberflächen von Gegenständen.

Gegenstände, seien es Produkte für den täglichen Gebrauch oder industrielle Zwischen- oder Fertigprodukte werden aus vielerlei Gründen häufig mit einer Kunststoffbeschichtung versehen.
Dabei kommt es meist darauf an, daß die aufgebrachte Kunststoffbeschichtung auf der Oberfläche des beschichteten Gegenstandes eine ausreichende Haftung aufweist, und sich bei Kraft- oder auch bei Wärmebeanspruchungen nicht, auch nicht teilweise von der Oberfläche des Gegenstandes löst.

Ursachen für die Ablösung einer Kunststoffbeschichtung von der Oberfläche des Gegenstandes können schon beim Aufbringen derselben auf den Gegenstand entstehen und treten häufig in Form von Flüssigkeitsoder Gasblasen auf, die durch Ausgasung der Umgebung entstehen. Solche Flüssigkeits- und/oder Gasblasen stören die Homogenität der Kunststoffbeschichtung und führen zur Bildung von Lunkern, in deren Bereich entweder keine oder eine nur unzreichende Haftung zwischen dem eigentlichen Gegenstand und der Kunststoffbeschichtung besteht. Da Kunststoffbeschichtungen, gleichwohl ob sie der elektrischen Isolierung oder nur dem Schutz der Oberfläche des Gegenstandes dienen, meist undurchsichtig sind, können solche Lunkerbildungen an dem beschichteten Gegenstand von außen nicht erkannt werden, sodaß zur Überprüfung der Qualität der Haftung der aufgebrachten Kunststoffbeschichtung meist deren Zerstörung erforderlich ist.

Der Erfindung liegt daher die Aufgabe zu Grunde, ein Verfahren zu schaffen, das eine zerstörungsfreie Überprüfung der Qualität der Haftung einer auf einen Gegenstand aufgebrachten Kunststoffbeschichtung ermöglicht.

Diese Aufgabe wird entsprechend dem kennzeichnenden Teil des Patentanspruches 1 dadurch gelöst, daß der Wert der Permittivität des mit der Kunststoffbeschichtung versehenen Gegenstandes (Prüfling) ermittelt und mit dem Wert der Permittivität eines mit einer einwandfrei aufgebrachten Kunststoffbeschichtung versehenen Gegenstandes (Vergleichs-Prüfling) zur Bildung eines Differenzwertes verglichen wird, von dessen Größe eine Aussage über die Qualität der Haftung der Kunststoffbeschichtung abgeleitet wird.

Grundlage der Erfindung ist die Tatsache, daß sich die Kapazität eines Kondensators durch Veränderung des Dielektrikums zwischen seinen Platten verändert läßt. Schiebt man zwischen die Platten eines Kondensators eine Isolierstoffplatte, so verändert sich dessen Kapazität entsprechend der Veränderung des Dielektrikums. Maßstab für die Veränderung des Dielektrikums ist die Permittivitätszahl, die eine reine Stoffkonstante ist und unabhängig von der Dicke der Isolierstoffplatte ist. Dies bedeutet, daß eine Veränderung der Isolierstoffplatte hinsichtlich ihrer Stoffzusammensetzung eine Veränderung ihrer Permittivitätszahl und somit auch eine Veränderung der Kapazität bzw des Verlustwinkels des Kondensators bewirkt.

Hiervon ausgehend weist ein aus einer Metallschicht, einer sich darüber befindlichen homogenen Haftschicht und einer Kunststoffschicht bestehendes Dielektrikum eine größenmäßig andere Permittivität auf als ein ebensolches Dielektrikum, dessen Haftschicht mit durch Gas- oder Luftblasen gebildeten Lunkern versehen ist. Die Veränderung der Permittivität bzw die damit einhergehende Veränderung des Verlustwinkels gegenüber einer normierten Ausgangsgröße stellt damit eine Meßgröße dar, die auf eine fehlerhafte Haftschicht schließen läßt.

Das erfindungsgemäße Verfahren läßt sich im einzelnen mit folgenden Verfahrensschritten durchführen:
**a)** Ermitteln der Permittivität des Vergleichs-Prüflings mittels eines Dielektrometrie-Meßgerätes und Speichern des Wertes der Permittivität im Speicher eines Mikroprozessors;
**b)** Ermitteln der Permittivität des Prüflings mittels des Dielektrometrie-Meßgerätes;
**c)** Zuführen der Daten der ermittelten Permittivität des Prüflings sowie der gespeicherten Daten des Vergleichs-Prüflings zu einem Vergleicher des Mikroprozessors zur Ermittlung des Differenzwertes der beiden Permittivitäten;
**d)** Ablegen der Daten des Differenzwertes im Speicher des Mikroprozessors und/oder Anzeigen des Differenzwertes auf einem Bildschirm.

Beim Einsatz des erfindungsgemäßen Verfahrens zur Herstellung von Zwischenprodukten, beispielsweise zur Herstellung von mit einer Kunststoffbeschichtung versehenen Stangen, Platten oder Rohren ist es vorteilhaft, die Permittivität des Prüflings entlang seiner Länge mehrmals aufeinanderfolgend zu ermitteln und die Daten der jeweils ermittellten Differenzwerte zwischen der jeweils ermittelten Permittivität des Prüflings und der Permittivität des Vergleichs-Prüflings zusammen mit den Daten der Koordinaten der jeweiligen Meßstelle im Speicher des Mikroprozessors abzulegen und/oder auf einem Bildschirm darzustellen.

Hierdurch erhält man Aufschluß darüber, ob die Kunststoffbeschichtung entlang der gesamten Länge des Prüflings ordnungsgemäß aufgebracht ist, und kann gegebenenfalls fehlerhafte Stellen gezielt heraustrennen.

Vorteilhaft ist es, wenn der Prüfling kontinuierlich oder intermittierend zur Meßstelle des Dielektrometrie-Meßgerätes geführt wird.

Zweckmäßig ist es, wenn die Kondensatorplatten des Dielektrometrie-Meßgerätes vollflächig elektrisch leitend mit der Ober- und Unterseite des Prüflings bzw des Vergleichs-Prüflings verbunden werden.

Zur Lösung der der Erfindung weiterhin zu Grunde liegenden Aufgabe, eine zur Durchführung des erfindungsgemäßen Verfahrens dienende Einrichtung zu schaffen, weist diese vorteilhafter Weise ein wahlweise mit dem Prüfling oder dem Vergleichs-Prüfling verbindbares Dielektrometrie-Meßgerät auf, das mit einem Mikroprozessor zur Bildung und Speicherung der Differenzwerte zwischen den Permittivitäten des Prüflings und des Vergleichs-Prüflings verbunden ist.

Um die aufeinanderfolgenden Messungen an einem Prüfling in bestimmten Zeitabständen durchführen zu können, kann der Mikroprozessor ein Zeitglied zur Steuerung der Zeitintervalle zwischen den aufeinanderfolgenden Messungen aufweisen. Sofern die entsprechenden Zeitabstände in Abhängigkeit von der Zuführgeschwindigkeit des Prüflings festgelegt werden, lassen sich auch die Abstände zwischen den einzelnen Meßpunkten über das Zeitglied steuern.

Um die Bereiche von fehlerhaften Stellen der Kunststoffbeschichtung aus dem Prüfling gezielt heraustrennen zu können, ist eine die Koordinaten der jeweiligen Meßstellen am Prüfling erfassende Koordinatenmeßvorrichtung vorgesehen, die zur Speicherung der Koordinaten der Meßstellen mit dem Mikroprozessor verbunden ist.

Dabei ist es vorteilhaft, wenn sowohl die Differenzwerte der Permittivitäten als auch die Koordinaten der Meßstellen auf einem mit dem Mikroprozessor verbundenen Bildschirm dargestellt werden können..

Weiterhin ist es vorteilhaft, wenn die Platten des Kondensators des Dielektrometrie-Meßgerätes vollflächig elektrisch leitend mit der Oberfläche des Prüflings verbunden sind.

Sofern die Oberfläche des Prüflings gekrümmt verläuft, können die Platten des Kondensators des Dielektrometrie-Meßgerätes als Sonden ausgebildet und an die Querschnittsform der Prüflinge angepassbar ein.

Weitere Einzelheiten und Vorteile der Erfindung ergeben sich aus der nachfolgenden Beschreibung einer in der beigefügten Prinzipzeichnung dargestellten Ausführungsform der Erfindung.

In der Prinzipzeichnung ist im linken Bereich der Querschnitt eines Vergleichs-Prüflings 1 gezeigt, der eine Metallschicht 3, eine darüber liegende Haftschicht 4 und oberhalb dieser eine Kunststoffbeschichtung 5 aufweist. Diese ist fehlerfrei auf die Metallschicht 3 aufgebracht, und daher homogen ausgebildet. An den Außenseiten der Metallschicht 3 sowie der Kunststoffbeschichtung 5 liegen die Platten 6 eines nicht näher gezeigten Kondensators eines Dielektrometrie-Meßgerätes 7 an.

Mit diesem wird die Permittivität des sich zwischen den Platten 6 befindlichen Dielektrikums 8 gemessen. Der Wert des Dielektrikums 8 wird vom Dielektrometrie-Meßgerät 7 zu einem Mikroprozessor 9 geführt und in dessen Speicher abgelegt.

Im rechten Bereich der Prinzipzeichnung ist der Querschnitt eines Prüflings 2 dargestellt, der den grundsätzlich gleichen Schichtaufbau wie der Vergleichs-Prüfling 1 aufweist. Die Kunststoffbeschichtung 5 ist im Bereich F des Prüflings 2 fehlerhaft aufgebracht und weist in diesem Bereich von Flüssigkeits- oder Gasblasen gebildete Lunker 11 auf. Im Bereich F ist die Haftung zwischen der Metallschicht 3 und der Kunststoffbeschichtung 5 demzufolge nur mangelhaft ausgebildet.

Demgegenüber ist die Kunststoffbeschichtung 5 beiderseits des Bereiches F fehlerfrei aufgebracht. Die Permittivität des sich im Bereich F befindlichen Dielektrikums 12 weicht aufgrund des stofflichen Unterschiedes von der Permittivität des sich beiderseits des Bereiches F befindlichen Dielektrikums 8 ab.

Um dies festzustellen wird mit dem wahlweise an den Vergleichs-Prüfling 1 oder den Prüfling 2 anschließbaren Dielektrometrie-Meßgerät 7 die Permittivität des Prüflings 2 an mehreren Stellen gemessen.
In der Prinzipdarstellung ist in deren rechten Hälfte die Situation beim Messen der Permittivität des sich im Bereich F befindlichen Dielektrikums 12 gezeigt. Hierzu sind die Platten 6 des Kondensators des Dielektrometrie-Meßgerätes 7 im Bereich F an die Außenseiten der Metallschicht 3 und der Kunststoffbeschichtung 5 des Prüflings 2 angelegt. Der mit diesem festgestellte Wert der Permittivität des Dielektrikums 12 wird ebenfalls dem Mikroprozessor 9 zugeführt und in diesem mit dem vorher im Speicher abgelegten Wert der Permittivität des Dielektrikums 8 des Vergleichs-Prüflings 1 verglichen. Der dabei ermittelte Differenzwert ist ein Hinweis auf den durch die Flüssigkeitsund/oder Gasblasen bedingten Fehler in der Haftung zwischen der Metallschicht 3 und der Kunststoffbeschichtung 5 innerhalb des Bereiches F des Prüflings 2. Der Differenzwert kann im Mikroprozessor 9 gespeichert und/oder auf einem an den Mikroprozessor 9 angeschlossenen Bildschirm 13 dargestellt werden.

Wird die Messung der Permittivität des sich seitlich des Bereiches F befindlichen Dielektrikums 8 in analoger Weise durchgeführt und wird der ermittelte Wert innerhalb des Mikroprozessors 9 mit dem gespeicherten Wert des Dielektrikums 8 des Vergleichs-Prüflings 1 verglichen, so zeigt sich, daß die beiden Werte gleich sind. Dies ist ein Hinweis, daß die Kunststoffbeschichtung 5 in diesem Bereich fehlerfrei aufgebracht ist und keine Flüssigkeits- oder Gasblasen vorhanden sind. Die Haftung zwischen der Metallschicht 3 und der Kunststoffbeschichtung 5 ist daher einwandfrei.

Das erfindungsgemäße Verfahren eignet sich in besonderer Weise zum Einsatz bei der Herstellung von Kunststoffbeschichtungen. Das Dielektrometrie-Meßgerät 7 kann online in einen Fertigungsfluß einbe-zogen werden, wozu die Prüflinge 2 dem Dielektrometrie-Meßgerät 7 mittels einer Zuführvorrichtung kontinuierlich oder intermittierend zugeführt werden können. Dabei ist es vorteilhaft, wenn der Mikroprozessor 9 ein mit dem Dielektrometrie-Meßgerät 7 gekoppeltes Zeitglied aufweist, um die Zeitintervalle zwischen den einzelnen Messungen zu steuern. Damit bietet sich die Möglichkeit, in den Fertigungsfluß des Beschichtens online einzugreifen und der Entstehung von Fehlern entgegen zu wirken.

In der Prinzipzeichnung ist ein Koordinatenmeßgerät 14 angedeutet, dessen Meßwertaufnehmer im Bereich der Meßstelle angeordnet sind. Mit dem Koordinatenmeßgerät 14 werden die Koordinaten der Meßstellen am Prüfling 2 erfaßt. Die entsprechenden Werte werden dem Mikroprozessor 9 zugeführt und zusammen mit den jeweils ermittelten Differenzwerten in diesem gespeichert und/oder online auf dem Bildschirm 13 angezeigt. Dabei kann vorgesehen sein, daß nur diejenigen Differenzwerte zusammen mit den Koordinaten der jeweiligen Meßstellen dem Mikroprozessor 9 zugeführt werden, die einen Hinweis auf ein fehlerhaftes Aufbringen der Kunststoffbeschichtung 5 geben.
Durch die Maßnahme, die jeweils ermittelten Differenzwerte die einen Hinweis auf eine fehlerhafte Beschichtung geben, zusammen mit den Koordinaten der Meßstelle am Prüfling 2 im Speicher des Mikroprozessors abzulegen, oder am Bildschirm anzuzeigen, eröffnet sich die Möglichkeit, nachträglich Bereiche fehlerhafter Beschichtung aus dem Prüfling 2 herauszutrennen.

Bei der vorstehend beschriebenen Ausführungsform der Einrichtung zur Durchführung des erfindungsgemäßen Verfahrens ist davon ausgegangen, daß die zu beschichtende Fläche des Prüflings eine ebene Fläche ist und die Platten 6 des Kondensators des Dielektrometrie-Meßgerätes 7 demzufolge ebenfalls als ebene Flächen ausgebildet sind. Sofern die zu prüfende Beschichtung von einer ebenen Fläche abweicht ist es möglich, die Platten 6 des Kondensators des Dielektrometrie-Meßgerätes 7 als Sonden auszubilden, deren Form an die Form des Prüflings 2 angepaßt oder anpaßbar ist.

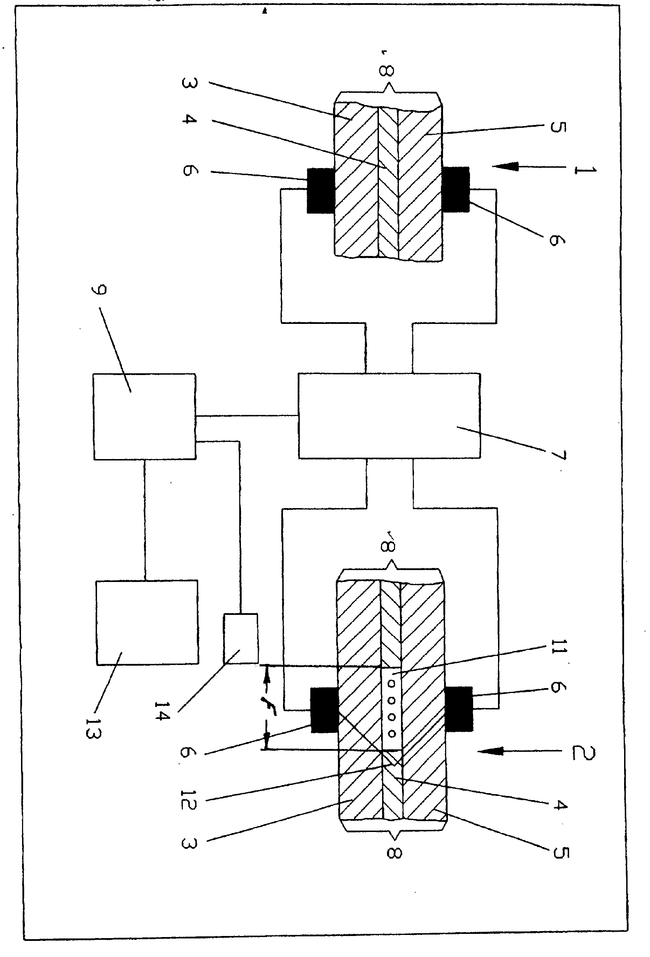

## Patentansprüche

1. Verfahren zur zerstörungsfreien Prüfung der Haftung von Kunststoffbeschichtungen auf Oberflächen von vorzugsweise metallenen Prüflingen, **dadurch gekennzeichnet, daß**
der Wert der Permittivität des Prüflings (2) ermittelt und mit dem Wert der Permittivität eines Vergleichs-Prüflings (1) zur Bildung eines Differenzwertes verglichen wird.

2. Verfahren nach Anspruch 1, **enthaltend die Schritte**
**a)** Ermitteln der Permittivität des Vergleichs-Prüflings (1) mittels eines Dielektrometrie-Meßgerätes (7) und Speichern des Wertes der Permittivität im Speicher eines Mikroprozessors (9);
**b)** Ermitteln der Permittivität des Prüflings (2) mittels des Dielektrometrie-Meßgerätes (7);
**c)** Zuführen der Daten der ermittelten Permittivität des Prüflings (2) sowie der gespeicherten Daten des Vergleichs-Prüflings (1) zu einem Vergleicher des Mikroprozessors (9) zur Ermittlung des Differenzwertes der beiden Permittivitäten;
**d)** Ablegen der Daten des Differenzwertes im Speicher des Mikroprozessors (9) und/oder Anzeigen des Differenzwertes auf einem Bildschirm (13).

3. Verfahren nach Anspruch 2, **dadurch gekennzeichnet, daß**
die Permittivität des Prüflings (3) entlang seiner Länge mehrmals aufeinanderfolgend ermittelt wird und die Differenzwerte zwischen diesen und den Daten der Permittivität des Vergleichs-Prüflings (1) zusammen mit den Daten der Koordinaten der jeweiligen Meßstelle im Speicher des Mikroprozessors (9) abgelegt und/oder auf einem Bildschirm (13) dargestellt werden.

4. Verfahren nach Anspruch 2, **dadurch gekennzeichnet, daß**
der Prüfling (2) kontinuierlich oder intermittierend zur Meßstelle des Dielektrometrie-Meßgerätes (7) geführt wird.

5. Verfahren nach einem oder mehreren der vorangehenden Ansprüche, **dadurch gekennzeichnet, daß**
die Kondensatorplatten (6) des Dielektrometrie-Meßgerätes (7) vollflächig elektrisch leitend mit der Ober- und Unterseite des Prüflings (2) bzw des Vergleichs-Prüflings (1) verbunden werden.

6. Einrichtung zur Durchführung des Verfahrens nach Anspruch 1, **gekennzeichnet durch**
ein wahlweise mit dem Prüfling (2) oder dem Vergleichs-Prüfling (1) verbindbares Dielektrometrie-Meßgerät (7), das mit einem Mikroprozessor (9) zur Bildung und Speicherung der Differenzwerte zwischen den Permittivitäten des Prüflings (2) und des Vergleichs-Prüflings (1) verbunden ist.

7. Einrichtung nach Anspruch 6, **dadurch gekennzeichnet, daß** der Mikroprozessor (9) ein Zeitglied zur Steuerung der Zeitintervalle zwischen den aufeinanderfolgenden Messungen der Permittivität am Prüfling (2) aufweist.

8. Einrichtung nach Anspruch 6, **gekennzeichnet durch**
eine die Koordinaten der jeweiligen Meßstelle am Prüfling (2) erfassende Koordinatenmeßvorrichtung (14), die zur Speicherung der Koordinaten der Meßstellen mit dem Mikroprozessor (9) verbunden ist.

9. Einrichtung nach Anspruch 6, **dadurch gekennzeichnet, daß** der Mikroprozessor (9) mit einem Bildschirm (13) verbunden ist.

10. Einrichtung nach Anspruch 6, **dadurch gekennzeichnet, daß** die Platten (6) des Kondensators des Dielektrometrie-Meßgerätes (7) vollflächig elektrisch leitend mit der Oberfläche des Prüflings (2) verbunden sind.

11. Einrichtung nach Anspruch 10, **dadurch gekennzeichnet, daß** die Platten (6) des Kondensators des Dielektrometrie-Meßgerätes (7) als Sonden ausgebildet und an die Querschnittsform der Prüflinge (2) angepassbar sind.
